# EUROPÄISCHE PATENTSCHRIFT

(11) **EP 4 462 735 B1**
(45) Veröffentlichungstag und Bekanntmachung des Hinweises auf die Patenterteilung: **07.10.2026**
(21) Anmeldenummer: 24174108.1
(22) Anmeldetag: 03.05.2024
(51) Int. Cl.: H04L 9/40, H04W 12/08, H04W 12/63, H04L 67/12, H04N 7/18, H04W 4/42, B61L 15/00, H04W 4/02, H04W 8/22

(54) **KONTROLLE EINES FERNZUGRIFFS**
REMOTE ACCESS CONTROL
CONTRÔLE D'ACCÈS À DISTANCE

(30) Priorität: 10.05.2023 DE 102023204324
(43) Veröffentlichungstag der Anmeldung: 13.11.2024
(73) Patentinhaber: Siemens Mobility GmbH, 80997 München (DE)
(72) Erfinder: Porsch, Roland, 95469 Speichersdorf (DE); Leupold, Philip, 90768 Fürth (DE)
(74) Vertreter: Siemens Patent Attorneys

(56) Entgegenhaltungen:
- KR-B1- 102 458 961
- US-A1- 2002 057 340
- US-A1- 2021 020 008

## Beschreibung

Die Erfindung betrifft ein Verfahren zur Kontrolle eines Fernzugriffs, ein System zur Durchführung des Verfahrens, ein Computerprogramm sowie ein computerlesbares Medium.

Mithilfe eines Fernzugriffs auf einen mobilen Netzwerkteilnehmer können rasch und aufwandsgünstig Überwachungsmaßnahmen von mobilen Netzwerkteilnehmern und dessen Komponenten durchgeführt werden. Solche Überwachungsmaßnahmen können beispielsweise einen Zustand einzelner Betriebskomponenten oder eines Innenraums des mobilen Netzwerkteilnehmers sowie Güter oder Fahrgäste des mobilen Netzwerkteilnehmers betreffen. So kann in einem speziellen Anwendungsfall ein Fahrgastraum eines schienengebundenen Personentransportfahrzeugs mittels eines Fernzugriffs auf eine oder mehrere Überwachungskameras im Hinblick auf Verschmutzung, Vandalismus oder liegengebliebene Gegenstände kontrolliert werden. Zudem können mittels der genannten Überwachungskameras Fahrgäste überwacht werden, welche sich in diesem Fahrgastraum aufhalten. Neben einem Fernzugriff auf Überwachungskameras ist es bereits bekannt, verschiedene Betriebskomponenten des mobilen Netzwerkteilnehmers mittels eines Fernzugriffs zu steuern, zu überwachen oder zu warten. So können beispielsweise Software-Updates mittels eines Fernzugriffs durchgeführt werden. Zudem kann dadurch auf Steuerungseinrichtungen eines mobilen Netzwerkteilnehmers zugegriffen werden. Dies ermöglicht es, beispielhaft Steuerparameter einer raumlufttechnischen Anlage oder einer Beleuchtungseinrichtung zu verändern.

Aufgrund der vielfältigen Möglichkeiten, welche mittels des Fernzugriffs durchgeführt werden können, ist eine Zugangsbeschränkung erforderlich. Hierzu ist es bekannt, Zugriffsberechtigungen für einzelne Komponenten des mobilen Netzwerkteilnehmers zu erteilen. Ein Beispiel für eine Fernüberwachungs- und Kommunikationstechnik, insbesondere eine integrierte Festnetz- und Mobilfunkelektronik, sowie eine zugehörige Software zur Verarbeitung von Objektattributen, ist in der Veröffentlichungsschrift US 2002/0057340 A1 beschrieben. Wird eine solche Zugriffsberechtigung beispielsweise für Überwachungskameras in einem Personentransportfahrzeug vergeben, wird bislang jedoch nicht eine Rolle eines Benutzers berücksichtigt. So kann jeder Benutzer mittels eines beispielhaften Zugriffs auf eine zugehörige Überwachungskamera einen Fahrgastraum oder einen Fahrzeugführerstand einsehen sowie die sich darin befindlichen Personen kontrollieren oder identifizieren. Es besteht daher die Gefahr, dass der Fernzugriff zu unrechtmäßigen Zwecken genutzt wird. Des Weiteren besteht die Gefahr, dass mittels eines Fernzugriffs auf eine Komponente des mobilen Netzwerkteilnehmers ein regulärer Betrieb des mobilen Netzwerkteilnehmers beeinträchtigt wird. So kann beispielsweise eine Veränderung von Steuerungskenngrößen in bestimmten Betriebskomponenten des mobilen Netzwerkteilnehmers oder eine Durchführung von Software-Updates mittels des Fernzugriffs dazu führen, dass ein Betrieb des mobilen Netzwerkteilnehmers unterbrochen wird.

Aufgabe der Erfindung ist es, ein verbessertes Verfahren zur Kontrolle eines Fernzugriffs bereitzustellen.

Diese Aufgabe wird gelöst durch ein Verfahren mit den Merkmalen des Anspruchs 1.

Des Weiteren liegt der Erfindung die Aufgabe zugrunde, ein System zur Durchführung des Verfahrens anzugeben.

Diese Aufgabe wird gelöst durch ein System mit den Merkmalen des nebengeordneten Systemanspruchs.

Ferner liegen der Erfindung die Aufgaben zugrunde, ein Computerprogramm sowie ein computerlesbares Medium anzugeben.

Diese Aufgaben werden gelöst durch ein Computerprogramm gemäß den Merkmalen des nebengeordneten Computerprogrammanspruchs sowie durch ein computerlesbares Medium gemäß den Merkmalen des nebengeordneten Anspruchs 15.

Das erfindungsgemäße Verfahren betrifft eine Kontrolle eines Fernzugriffs auf wenigstens einen Netzwerkteilnehmer erster Art ausgehend von einem Netzwerkteilnehmer zweiter Art. Der wenigstens eine Netzwerkteilnehmer erster Art ist vorliegend Teil des mobilen Netzwerkteilnehmers.

Zum Zwecke einer Steuerung des Fernzugriffs sieht das erfindungsgemäße Verfahren vor, dass eine Information erster Art betreffend den mobilen Netzwerkteilnehmer erfasst wird und dass eine Information zweiter Art betreffend eine Zugriffsberechtigung des Netzwerkteilnehmers zweiter Art auf den wenigstens einen Netzwerkteilnehmer erster Art ermittelt wird. Auf Basis der erfassten Information erster Art sowie der ermittelten Information zweiter Art ist vorgesehen, dass der Fernzugriff auf den wenigstens einen Netzwerkteilnehmer erster Art gesteuert wird.

Unter dem Zugriff auf den wenigstens einen Netzwerkteilnehmer erster Art soll im vorliegenden Zusammenhang verstanden werden, dass der Netzwerkteilnehmer zweiter Art Daten von dem wenigstens einen Netzwerkteilnehmer erster Art lesen, Daten auf diesen schreiben sowie Daten des wenigstens einen Netzwerkteilnehmers erster Art verwalten, verändern und/oder löschen kann.

Das erfindungsgemäße Verfahren ermöglicht es, einen Fernzugriff nach Maßgabe von Eigenschaften oder Zuständen des mobilen Netzwerkteilnehmers zu steuern. Neben einer Vergabe von statischen Zugriffsrechten können auf diese Weise Informationen betreffend den mobilen Netzwerkteilnehmer bei der Steuerung des Fernzugriffs berücksichtigt werden. Des Weiteren kann dadurch eine für verschiedene Anwendungsfälle bedarfsgerecht anpassbare Kontrolle des Fernzugriffs erfolgen.

Vorzugsweise werden mehrere Netzwerkteilnehmer erster Art zu einer Gruppe zusammengefasst. Zum Zwecke der Kontrolle des Fernzugriffs auf die Gruppe der Netzwerkteilnehmer erster Art wird ein Vorliegen einer Zugriffsberechtigung des Netzwerkteilnehmers zweiter Art geprüft. Des Weiteren wird die Information erster Art betreffend den mobilen Netzwerkteilnehmer erfasst und die Information zweiter Art betreffend eine Zugriffsberechtigung des Netzwerkteilnehmers zweiter Art auf die Gruppe der Netzwerkteilnehmer erster Art ermittelt. Ein Zugriff auf die Gruppe der Netzwerkteilnehmer erster Art wird sodann auf Basis der erfassten Information erster Art sowie der ermittelten Information zweiter Art gesteuert. Dies ermöglicht es, einen Fernzugriff auf Netzwerkteilnehmer erster Art, welche dieselbe Funktion, räumliche Anordnung und/oder Aufgabe aufweisen, auf einfache Weise zusammenzufassen.

Des Weiteren ist vorgesehen, dass ein Fernzugriff auf den wenigstens einen Netzwerkteilnehmer erster Art auf Basis einer Information erster Art betreffend einen Betriebszustand des mobilen Netzwerkteilnehmers sowie der ermittelten Information zweiter Art gesteuert wird. Alternativ oder zusätzlich ist vorgesehen, dass der Fernzugriff auf den Netzwerkteilnehmer erster Art auf Basis einer Information erster Art betreffend eine Dauer des Betriebszustands des mobilen Netzwerkteilnehmers sowie der ermittelten Information zweiter Art gesteuert wird. Auf Basis des Betriebszustands oder der Dauer des Betriebszustands wird eine einfache Entscheidungsfindung zum Zwecke einer Steuerung des Fernzugriffs ermöglicht. Befindet sich beispielsweise ein Fahrzeug in einem bestimmungsgemäßen Betriebszustand, so kann ein Fernzugriff auf zum Zwecke einer Aufrechterhaltung eines Betriebs des Fahrzeugs erforderlichen Steuerungseinrichtungen verwehrt werden. Des Weiteren kann im Falle eines bestimmungsgemäßen Betriebszustands eines Personentransportfahrzeugs davon ausgegangen werden, dass sich Personen in diesem Fahrzeug befinden. Ein Fernzugriff auf Überwachungskameras eines Fahrgastraums kann zum Schutz von Persönlichkeitsrechten der Fahrgäste in nur wenigen vorbestimmten Fälle gewährt werden. Befindet sich andererseits der mobile Netzwerkteilnehmer in einem abgestellten oder abgerüsteten Betriebszustand, wie beispielsweise einer Betriebspause oder einer Betriebsunterbrechung, so kann auf einfache Weise der Fernzugriff auf vorbestimmte Netzwerkteilnehmer erster Art von dem Netzwerkteilnehmer zweiter Art durch einen Nutzer ermöglicht werden. Zum Zwecke einer Wartung oder einer Zustandskontrolle kann dieser sodann auf Steuerungseinrichtungen oder Überwachungskameras zugreifen. Soll dabei beispielsweise ein Software-Update oder eine Änderung an der Steuerungseinrichtung des mobilen Netzwerkteilnehmers vorgenommen werden, so kann der Zugriff diesbezüglich auf Basis einer Dauer des Betriebszustands gesteuert werden. Ist beispielsweise absehbar, dass der mobile Netzwerkteilnehmer zu einem Zeitpunkt einen bestimmungsgemäßen Betriebszustand wieder aufnimmt, welcher vor einem voraussichtlichen Abschluss des Software-Updates oder einem voraussichtlichen Ende der Änderung der Steuerungseinrichtung des mobilen Netzwerkteilnehmers liegt, so kann der Fernzugriff verhindert werden. Störungen des mobilen Netzwerkteilnehmers durch den Fernzugriff können dadurch einfach vermieden werden.

Vorteilhafterweise wird ein Fernzugriff auf den wenigstens einen Netzwerkteilnehmer erster Art auf Basis einer Information erster Art betreffend eine Position des mobilen Netzwerkteilnehmers und/oder einen Fahrweg des mobilen Netzwerkteilnehmers sowie der ermittelten Information zweiter Art gesteuert. Dadurch kann bei der Steuerung des Fernzugriffs berücksichtigt werden, wo sich der mobile Netzwerkteilnehmer befindet, welche Rechte dort gelten, welche Übertragungsgeschwindigkeiten, Bandbreiten oder Netzbetreiber dort vorliegen. Damit kann verhindert werden, dass in Gebieten mit schwacher Netzabdeckung eine Überlastung oder gar ein Ausfall einer Datenverbindung auftritt. Zudem können so auf einfache Weise gesetzliche Vorschriften im Ausland berücksichtigt werden. Beispielsweise kann im einzelnen Anwendungsfall verhindert werden, dass nationale Rechte eines Landes mittels eines Fernzugriffs durch eine unberechtigte Person verletzt werden.

Ferner sieht eine vorteilhafte Weiterbildung vor, dass ein Fernzugriff auf den Netzwerkteilnehmer erster Art auf Basis einer Information erster Art betreffend eine Personenpräsenz in dem mobilen Netzwerkteilnehmer sowie der ermittelten Information zweiter Art gesteuert wird. Der Fernzugriff auf den Netzwerkteilnehmer erster Art, welcher unmittelbar eine sich in dem mobilen Netzwerkteilnehmer befindliche Person betrifft, kann verhindert werden. Beispielsweise kann auf diese Weise ein Fernzugriff auf eine Beleuchtungseinrichtung oder Überwachungskameras in sensiblen Bereichen wie Toiletten oder Umkleideräumen, Schlafbereichen oder Fahrzeugführerständen im Falle einer Personenpräsenz verhindert werden.

Vorteilhafterweise wird als mobiler Netzwerkteilnehmer ein schienengebundenes Fahrzeug vorgesehen. Solche Fahrzeuge weisen zumeist eine Vielzahl an verschiedenartigen sowie gleichartigen Netzwerkteilnehmern erster Art auf. Beispielhaft werden als Netzwerkteilnehmer erster Art eine Überwachungskamera, eine raumlufttechnische Anlage, eine Beleuchtungseinrichtung, eine Personenzählvorrichtung und/oder eine Vorrichtung zum Zwecke einer Erfassung einer Personenpräsenz vorgesehen. Mittels des vorliegenden Verfahrens zur Kontrolle des Fernzugriffs kann ein zuverlässiger und sicherer Betrieb des schienengebundenen Fahrzeugs und der zugehörigen Netzwerkteilnehmer erster Art ermöglicht werden.

Ferner sieht eine vorteilhafte Weiterbildung vor, dass dem Netzwerkteilnehmer zweiter Art zum Zwecke einer Steuerung des Fernzugriffs eine vorgebbare Eigenschaft zugeordnet wird. Nach Maßgabe dieser des Netzwerkteilnehmers zweiter Art vorgebbaren Eigenschaft wird der Fernzugriff auf den wenigstens einen Netzwerkteilnehmer erster Art auf Basis der erfassten Information erster Art und der ermittelten Information zweiter Art freigegeben. Bevorzugterweise werden dem Netzwerkteilnehmer zweiter Art mittels eines Benutzerprofils vorgebbare Eigenschaften zugeordnet. Eine solche Eigenschaft kann beispielsweise in einer Rolle eines Nutzers oder in einer Tätigkeit eines Nutzers begründet sein. Auf Basis der Eigenschaft können einfach Bedingungen vorgegeben werden, welche die Information erster Art und die Information zweiter Art betreffen. Auf diese Weise können für grundsätzlich unterschiedliche Anwendungsfälle Benutzerprofile erstellt werden, welche lediglich im Falle eines Vorliegens und nach Erfüllung vorbestimmter Bedingungen betreffend die Information erster Art und/oder die Information zweiter Art eine Freigabe für einen Fernzugriff auf den wenigstens einen Netzwerkteilnehmer erster Art erhalten. Dadurch kann ein einfaches und flexibel anpassbares Steuerverfahren für beliebige, individuelle Bedürfnisse bereitgestellt werden.

Vorzugsweise wird nach Maßgabe der Eigenschaft des Netzwerkteilnehmers zweiter Art der Zugriff auf den wenigstens einen Netzwerkteilnehmer erster Art auf Basis der erfassten Information erster Art und der ermittelten Information zweiter Art verwehrt oder abgebrochen. Wird eine der vorbestimmten Bedingungen, welche mit der Eigenschaft des Netzwerkteilnehmers zweiter Art verknüpft ist, nicht erfüllt, so kann auf einfache Weise der Fernzugriff verwehrt werden. Wurde bereits ein Fernzugriff auf den zumindest einen Netzwerkteilnehmer erster Art freigegeben, und es tritt nachträglich der Fall ein, dass wenigstens eine der vorbestimmten Bedingungen nicht mehr erfüllt ist, so wird bevorzugt der Fernzugriff abgebrochen. Dadurch kann der Fernzugriff rasch an sich verändernde Situationen angepasst werden und im einzelnen Anwendungsfall verwehrt oder abgebrochen werden.

In einer vorteilhaften Ausführungsvariante wird ein Netzwerkteilnehmer zweiter Art vorgesehen, welchem eine Zugriffsberechtigung auf wenigstens eine Überwachungskamera des mobilen Netzwerkteilnehmers zugeordnet wird. Des Weiteren wird diesem Netzwerkteilnehmer zweiter Art eine Eigenschaft zugeordnet. Nach Maßgabe dieser Eigenschaft wird der Fernzugriff auf die Überwachungskamera freigegeben, solange sich eine Position des mobilen Netzwerkteilnehmers innerhalb eines vorgebbaren Bereichs befindet. Anderenfalls wird dem Netzwerkteilnehmer zweiter Art der Fernzugriff auf die Überwachungskamera verwehrt oder ein freigegebener Fernzugriff abgebrochen. Dadurch kann ein Fernzugriff auf Videodaten auf einfache Weise räumlich beschränkt werden. Des Weiteren können so rechtliche Bedingungen im Falle eines Übertritts von einem Land in ein Nachbarland zuverlässig berücksichtigt werden. So kann beispielsweise einem Exekutivbeamten ein Zugriff auf eine Überwachungskamera des mobilen Netzwerkteilnehmers verwehrt werden, sobald sich der mobile Netzwerkteilnehmer außerhalb eines Zuständigkeitsbereichs befindet. Tritt hingegen der mobile Netzwerkteilnehmer in den Zuständigkeitsbereich des Exekutivbeamten ein, wird diesem ein Zugriff auf die Überwachungskamera freigegeben.

Alternativ oder zusätzlich kann vorgesehen sein, dass dem Netzwerkteilnehmer zweiter Art, welcher eine Zugriffsberechtigung auf wenigstens eine Überwachungskamera des mobilen Netzwerkteilnehmers aufweist, eine Eigenschaft zugeordnet wird, nach Maßgabe derer der Fernzugriff auf die wenigstens eine Überwachungskamera freigegeben wird, sofern sich keine Person innerhalb eines vorgebbaren Abschnitts des mobilen Netzwerkteilnehmers befindet. Dabei kann nach Maßgabe dieser Eigenschaft alternativ oder zusätzlich der Zugriff auf die wenigstens eine Überwachungskamera für diesen Netzwerkteilnehmer zweiter Art freigegeben werden, sofern sich der mobile Netzwerkteilnehmer in einem vorgebbaren Betriebszustand befindet. Anderenfalls wird diesem Netzwerkteilnehmer zweiter Art der Zugriff verwehrt oder abgebrochen. Auf diese Weise können eine Vielzahl an Benutzerprofilen geschaffen werden, welchen jeweils eine Zugriffsberechtigung für die wenigstens eine Überwachungskamera des mobilen Netzwerkteilnehmers zugeordnet wird. Dennoch kann in Abhängigkeit der jeweils einem Benutzerprofil zugeordneter Eigenschaften der Fernzugriff auf Basis einer Personenpräsenz in dem mobilen Fahrzeug oder auf Basis des Betriebszustands des mobilen Netzwerkteilnehmers zuverlässig gesteuert werden.

Vorzugsweise wird als Netzwerkteilnehmer zweiter Art ein stationärer Netzwerkteilnehmer vorgesehen. Bei dem stationären Netzwerkteilnehmer handelt es sich bevorzugt um die sogenannte Landseite, welcher im Zusammenhang mit schienengebundenen Fahrzeugen als ein stationärer Kommunikationspartner vorgesehen ist. Beispielhaft handelt es sich bei dem stationären Netzwerkteilnehmer um einen Server oder um eine Datenverarbeitungsvorrichtung, mittels welcher ein Fernzugriff auf den wenigstens einen Netzwerkteilnehmer erster Art möglich ist.

Des Weiteren sieht die Erfindung ein erfindungsgemäßes Netzwerk vor, mittels welchem das erfindungsgemäße Verfahren durchführbar ist.

Das erfindungsgemäße Netzwerk weist einen mobilen Netzwerkteilnehmer mit wenigstens einem Netzwerkteilnehmer erster Art sowie einen Netzwerkteilnehmer zweiter Art auf, mittels welchem das erfindungsgemäße Verfahren durchführbar ist. Vorzugsweise weist das Netzwerk zu diesem Zweck wenigstens eine Datenverarbeitungsvorrichtung auf, mittels welcher ein Fernzugriff von dem Netzwerkteilnehmer zweiter Art auf den wenigstens einen Netzwerkteilnehmer erster Art gemäß dem erfindungsgemäßen Verfahren steuerbar ist. Diese Datenverarbeitungsvorrichtung kann dabei Teil des mobilen Netzwerkteilnehmers, des wenigstens einen Netzwerkteilnehmers erster Art und/oder des Netzwerkteilnehmers zweiter Art sein.

Bei der genannten Datenverarbeitungsvorrichtung kann es sich beispielsweise um einen Computer, einen Mikrocontroller, einen Prozessor oder eine andere programmierbare Hardwarekomponente handeln. Dabei ist die Datenverarbeitungsvorrichtung zweckmäßigerweise dazu eingerichtet, Daten einzulesen, zu schreiben, zu übertragen und/oder zu verwalten. Diese Datenverarbeitungsvorrichtung kann dabei Teil einer dezentralen Datenverarbeitungseinrichtung sein, wie dies beispielsweise im Falle von Edge-Computing der Fall ist. So können mehrere Datenverarbeitungsvorrichtungen des Netzwerks gemeinsam dazu eingerichtet sein, das erfindungsgemäße Verfahren durchzuführen.

In einer vorteilhaften Ausführungsvariante wird vorgeschlagen, dass als der mobile Netzwerkteilnehmer ein schienengebundenes Fahrzeug vorgesehen ist. Vorzugsweise handelt es sich bei dem schienengebundenen Fahrzeug um ein schienengebundenes Personentransportfahrzeug. Dadurch kann im einzelnen Anwendungsfall eine stetig hohe Nachfrage nach einem Fernzugriff auf Geräte und Subsysteme von schienengebundenen Fahrzeugen durch landseitige Anwendungen einfach gesteuert werden.

Ferner sieht die Erfindung ein Computerprogramm vor, welches bei dessen Ausführung das erfindungsgemäße Netzwerk dazu veranlasst, das erfindungsgemäße Verfahren durchzuführen.

Zudem sieht die Erfindung ein computerlesbares Medium vor. Dieses weist Instruktionen auf, welche das erfindungsgemäße Netzwerk dazu veranlassen, das erfindungsgemäße Verfahren durchzuführen. Bei dem vorgenannten computerlesbaren Medium kann es sich beispielsweise um eine CD-ROM, eine DVD, einen USB- oder Flash-Speicher oder um ein nicht körperliches Medium, wie ein Datenstrom und/oder ein digitales Trägersignal handeln.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen:
- FIG 1: ein Ausführungsbeispiel eines Netzwerks in einer schematischen Darstellung sowie eine Illustration eines Beispiels eines Verfahrens zur Kontrolle eines Fernzugriffs;
- FIG 2: eine schematische Darstellung des Beispiels des Verfahrens zur Kontrolle eines Fernzugriffs in einem Ablaufdiagramm.

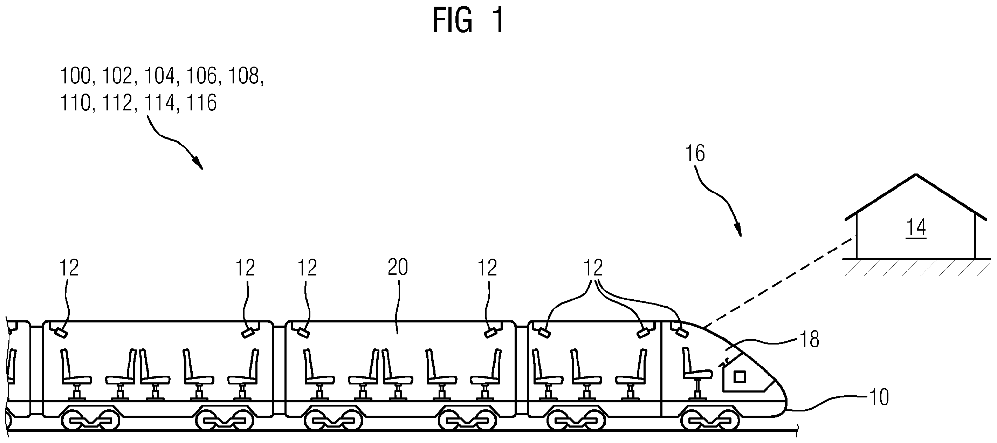

FIG 1 zeigt eine schematische Darstellung eines Ausführungsbeispiels eines Netzwerks 16. Das Netzwerk 16 weist beispielhaft ein schienengebundenes Personentransportfahrzeug 10 als mobilen Netzwerkteilnehmer 10 auf. In einem Fahrgastraum 20 sind mehrere Überwachungskameras 12 als Netzwerkteilnehmer erster Art 12 angeordnet. Zudem ist als ein weiterer Netzwerkteilnehmer erster Art 12 eine Überwachungskamera 12 in einem Fahrzeugführerstand 18 angeordnet. Des Weiteren ist ein stationärer Server 14 als Netzwerkteilnehmer zweiter Art 14 vorgesehen. In einer alternativen Ausführungsvariante kann der Netzwerkteilnehmer zweiter Art 14 ein dem Fachmann bekanntes mobiles Endgerät oder eine dem Fachmann bekannte Datenverarbeitungsvorrichtung allgemeiner Art sein. Anhand des Ausführungsbeispiels des Netzwerks 16 ist in FIG 1 ein Beispiel eines Verfahrens 100 zur Kontrolle eines Fernzugriffs auf die Überwachungskameras 12 ausgehend von dem stationären Server 14 illustriert.

Alternativ oder zusätzlich zu den in FIG 1 beispielhaft in einem Fahrgastraum 20 oder Fahrzeugführerstand 18 angeordneten Überwachungskameras 12 können Überwachungskameras 12 als Netzwerkteilnehmer erster Art 12 in nicht näher dargestellten Toiletten des schienengebundenen Personentransportfahrzeugs 10 angeordnet sein. Ferner können Überwachungskameras zum Zwecke einer Überwachung eines Pantographen des schienengebundenen Personentransportfahrzeugs 10 vorgesehen sein. Ferner können als Netzwerkteilnehmer erster Art 12 weitere Komponenten des schienengebundenen Personentransportfahrzeugs 10 vorgesehen sein, wie beispielsweise eine oder mehrere raumlufttechnische Anlagen, eine oder mehrere Beleuchtungseinrichtungen, eine Personenzählvorrichtung und/oder eine Vorrichtung zum Zwecke einer Erfassung einer Personenpräsenz. Zum Zwecke einer übersichtlichen Veranschaulichung der Erfindung wird auf eine Darstellung dieser beispielhaft genannten Komponenten des mobilen Netzwerkteilnehmers 10 verzichtet.

Zum Zwecke der Kontrolle des Fernzugriffs auf die mehreren Überwachungskameras 12 von dem stationären Server 14 sieht das vorliegend beschriebene Beispiel des Verfahrens 100 vor, dass mehrere Benutzerprofile angelegt werden. Mittels eines solchen Benutzerprofils können Eigenschaften und Zugriffsberechtigungen verschiedenen Nutzern zugeordnet werden. Anhand eines Benutzerprofils kann ein zugehöriger Nutzer mittels des stationären Servers 14 beispielhaft auf wenigstens eine Überwachungskamera 12 der mehreren Überwachungskameras 12 zugreifen. Zum Zwecke einer Steuerung 106 des Fernzugriffs auf diese Überwachungskameras 12 werden dem stationären Server 14 mittels eines ausgewählten Benutzerprofils vorgebbaren Eigenschaften zugeordnet 110. Nach Maßgabe der auf diese Weise zugeordneten Eigenschaften 110 wird der Fernzugriff von dem stationären Server 14 auf wenigstens eine der mehreren Überwachungskameras 12 gesteuert 106. Vorliegend erfolgt eine Steuerung 106 des Fernzugriffs mittels des stationären Servers 14. In diesem Zusammenhang ist der stationäre Server 14 beispielhaft dazu eingerichtet, die Information erster Art zu erfassen 102 und die Information zweiter Art zu ermitteln 104, um auf Basis derer den Fernzugriff zu steuern 106.

Im vorliegenden Beispiel des Verfahrens 100 wird hierzu als Information erster Art betreffend das schienengebundene Personentransportfahrzeug 10 ein Betriebszustand des schienengebundenen Personentransportfahrzeugs 10, eine Dauer dieses Betriebszustands, eine Position des schienengebundenen Personentransportfahrzeugs 10, ein Fahrweg des schienengebundenen Personentransportfahrzeugs 10 und/oder eine Personenpräsenz in dem Fahrgastraum 20 oder dem Fahrzeugführerstand 18 des schienengebundenen Personentransportfahrzeugs 10 erfasst 102. Zum Zwecke des Erfassens 102 der Information erster Art weist das schienengebundene Personentransportfahrzeugs 10 beispielhaft dem Fachmann bekannte nicht näher dargestellte Einrichtungen, wie Sensoren, auf. Des Weiteren wird zur Steuerung 106 des Fernzugriffs eine Information zweiter Art betreffend eine Zugriffsberechtigung des stationären Servers 14 ermittelt 104. Diese Zugriffsberechtigung ist vorliegend beispielhaft in einem Benutzerprofil der vorgenannten Art hinterlegt. Eine solche Zugriffsberechtigung kann einzelne oder mehrere Überwachungskameras 12 des schienengebundenen Personentransportfahrzeugs 10 betreffen. Bevorzugt betrifft die Zugriffsberechtigung mehrere zu einer Gruppe zusammengefassten 108 Überwachungskameras 12.

Im vorliegend beschriebenen Beispiel des Verfahrens werden beispielhaft Überwachungskameras 12 zu einer Gruppe zusammengefasst 108, welche in dem Fahrgastraum 20 angeordnet sind. Zusätzlich kann die Zugriffsberechtigung eine weitere Gruppe betreffen, in welcher alle Überwachungskameras 12 zusammengefasst sind 108, welche in Fahrzeugführerständen 18 angeordnet sind. So ist ferner denkbar, dass weitere, nicht näher dargestellte Netzwerkteilnehmer erster Art 12 bedarfsgerecht zu Gruppen zusammengefasst werden 108. Beispielhaft können raumlufttechnische Anlagen oder Beleuchtungseinrichtungen vorbestimmter Abschnitte des schienengebundenen Personentransportfahrzeugs 10 zu Gruppen zusammengefasst werden 108, für welche auf einfache Weise gemeinsam eine Zugriffsberechtigung erteilt werden kann. Ferner sieht das Beispiel des Verfahrens 100 vor, dass mittels der Information zweiter Art eine Art und ein Umfang der Zugriffsberechtigung berücksichtigt werden. Auf diese Weise kann mittels der Zugriffsberechtigung beispielsweise berücksichtigt werden, inwieweit ein Einschalten und/oder ein Auslesen sowie eine Wartung der Überwachungskameras 12 oder anderer nicht näher dargestellter Netzwerkteilnehmer erster Art 12 ermöglicht wird. Beispielhaft ist im vorliegenden Zusammenhang vorgesehen, dass die im Folgenden beispielhaft beschriebenen Benutzerprofile dem stationären Server 14 mittels des Benutzerprofils ein Einschalten sowie ein Auslesen von zugehörigen Videoaufzeichnungen von einer Gruppe der Überwachungskameras 12 ermöglicht werden. In anderen Anwendungsfällen wird der stationäre Server 14 beispielsweise mittels des Benutzerprofils im Rahmen der Zugriffsberechtigung dazu berechtigt, eine Veränderung von Steuerparametern einer raumlufttechnischen Anlage, wie beispielsweise ein Soll-Wert betreffend eine Temperatur oder eine Lüfterdrehzahl, vorzunehmen. Des Weiteren kann in einem besonderen Anwendungsfall auf Basis der Information zweiter Art berücksichtigt werden, ob eine Berechtigung zur Durchführung eines Software-Updates vorliegt.

Auf diese Weise kann eine beliebige Anzahl an individuell gestaltbaren Benutzerprofilen erstellt werden, durch welche verschiedene Rollen von Benutzern abgebildet werden können.

Beispielsweise kann mittels eines ersten Benutzerprofils die Rolle eines Bundespolizisten als Exekutivbeamter abgebildet werden. Hierzu wird dem ersten Benutzerprofil eine Zugriffsberechtigung zum Einschalten und Auslesen der zu einer Gruppe zusammengefassten 108 Überwachungskameras 12, welche in dem Fahrgastraum 20 des schienengebundenen Personentransportfahrzeugs 10 angeordnet sind, zugeordnet 116. Ein Fernzugriff auf weitere, nicht dargestellte Überwachungskameras des schienengebundenen Personentransportfahrzeugs 10, ist im vorliegenden Beispiel des Verfahrens 100 nicht von der Zugriffsberechtigung umfasst. So wird es dem Bundespolizist ermöglicht, mittels des stationären Servers 14 auf die vorgenannte Gruppe der Überwachungskameras 12 zuzugreifen. Ferner ist vorliegend vorgesehen, dass dem stationären Server 14 mittels des ersten Benutzerprofils weitere Eigenschaften eines realen Bundespolizisten zugeordnet werden 110. Eine solche Eigenschaft betrifft vorliegend beispielhaft einen Zuständigkeitsbereich des Bundespolizisten. Dadurch kann der Fernzugriff des Bundespolizisten, welchem zunächst eine Zugriffsberechtigung auf die genannte Gruppe der Überwachungskameras 12 zugeordnet ist 116, gesteuert werden 106. Zu diesem Zweck sieht das vorliegend beschriebene Verfahren 100 vor, dass eine Position sowie ein Fahrweg des schienengebundenen Personentransportfahrzeugs 10 erfasst werden 102. Fordert der Bundespolizist durch den stationären Server 14 mittels des ersten Benutzerprofils einen Fernzugriff auf die Gruppe der Überwachungskameras 12 an, wird ihm diese freigegeben 112, sofern sich das schienengebundene Personentransportfahrzeug 10 innerhalb eines gemäß den Eigenschaften des Bundespolizisten vorgegebenen Zuständigkeitsbereichs befindet. Anderenfalls wird diesem nach Maßgabe der genannten Eigenschaft der Fernzugriff mittels des stationären Servers 14 verwehrt 114. Des Weiteren ist vorgesehen, dass der Fernzugriff abgebrochen wird 114, sobald das schienengebundene Personentransportfahrzeug 10 den Zuständigkeitsbereich des Bundespolizisten verlässt. So kann der Fernzugriff auf einfache Weise derart gesteuert werden 106, dass der Bundespolizist mittels Fernzugriff auf die Gruppe der Überwachungskameras 12 Personen kontrolliert und identifiziert, welche sich in dessen Zuständigkeitsbereich befinden. Das erste Benutzerprofil ist dabei um weitere Eigenschaften und Bedingungen je nach Bedarfsfall erweiterbar. So können beispielsweise auch Überwachungskameras 12 in Fahrzeugführerständen 18 als weitere Gruppe hinzugefügt werden, auf welche der Bundespolizist nach Maßgabe von ihm zugeschriebenen Eigenschaften Fernzugriff erlangen kann.

Des Weiteren kann beispielhaft ein zweites Benutzerprofil vorgesehen sein, welchem die Rolle eines Kontrolleurs im Hinblick auf einen Fahrzeugzustand zugeordnet wird. Neben der beispielhaft genannten Gruppe der Überwachungskameras 12, welche in dem Fahrgastraum 20 angeordnet sind, werden diesem Kontrolleur vorliegend Zugriffsberechtigungen für weitere Überwachungskameras 12, welche vorzugsweise in Gruppen zusammengefasst werden 108, mittels des zweiten Benutzerprofils zugeordnet 116. Insbesondere werden dem Kontrolleur mittels des zweiten Benutzerprofils Zugriffsberechtigungen auf Überwachungskameras 12 zugeordnet 116, welche in Fahrzeugführerständen 18 und/oder nicht näher dargestellten Toiletten des schienengebundenen Personentransportfahrzeugs 10 angeordnet sind. Ferner werden dem stationären Server 14 mittels des zweiten Benutzerprofils in der Rolle des Kontrolleurs weitere Eigenschaften zugeordnet, nach deren Maßgabe der Fernzugriff auf die gewünschten Gruppen der Überwachungskameras 12 freigegeben werden 112. Der Kontrolleur ist grundsätzlich nicht dazu berechtigt, Personen zu kontrollieren oder zu identifizieren. Bereits aus diesem Grund ist es erforderlich, dass der zu kontrollierende Abschnitt des schienengebundenen Personentransportfahrzeugs 10 im Falle eines Fernzugriffs frei von Fahrgästen ist. Zu diesem Zweck wird eine Information erster Art betreffend eine Personenpräsenz in einem zu kontrollierenden Abschnitt des schienengebundenen Personentransportfahrzeugs 10 erfasst 102. Der Fernzugriff wird vorliegend nach Maßgabe einer Personenpräsenz derart gesteuert 106, dass ein Fernzugriff auf die besagten Überwachungskameras 12 von dem stationären Server 14 freigegeben wird 112, sofern sich keine Personen innerhalb des zu kontrollierenden Abschnitts befinden. Befinden sich hingegen Personen in dem zu kontrollierenden Abschnitt, so wird der Fernzugriff verwehrt 114. Treten Personen nach einer Freigabe 112 des Fernzugriffs in diesen Abschnitt ein, sieht das vorliegende Verfahren 100 vor, dass der Fernzugriff abgebrochen wird 114. Zudem kann als weitere mit der Eigenschaft des Kontrolleurs verknüpfte Bedingung vorgesehen sein, dass sich das schienengebundene Personentransportfahrzeug 10 zum Zwecke einer Kontrolle durch den Kontrolleur in einem vorbestimmten Betriebszustand befindet. Beispielsweise kann dieser Betriebszustand einen Putzbetrieb oder einen abgerüsteten Zustand betreffen. Diesbezüglich sieht das vorliegend illustrierte Verfahren 100 beispielhaft vor, dass dem stationären Server 14 nach Maßgabe der in dem Benutzerprofil hinterlegten Eigenschaften der Fernzugriff auf Überwachungskameras 12, für welche eine Zugriffsberechtigung vorliegt, auf Basis der erfassten 102 Information erster Art betreffend den Betriebszustand des schienengebundenen Personentransportfahrzeugs 10 nur dann freigegeben wird 112, sofern sich das schienengebundenen Personentransportfahrzeug 10 in dem vorgegebenen Betriebszustand befindet. Anderenfalls wird der Fernzugriff verweigert 114. Im Falle, dass eine diesbezügliche Freigabe 112 bereits erteilt wurde und sich ein Betriebszustand des schienengebundenen Fahrzeugs 10 nachträglich ändert, ist vorliegend vorgesehen, dass der Fernzugriff auf Basis des sich geänderten Betriebszustands abgebrochen wird 114.

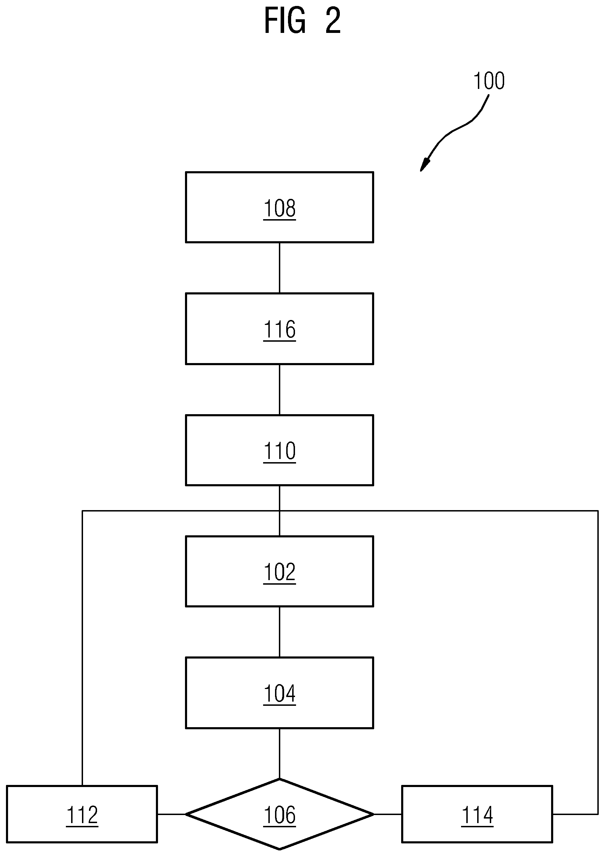

FIG 2 illustriert das im Zusammenhang mit FIG 1 beschriebene Beispiel des Verfahrens 100 anhand eines schematischen **Ab**laufdiagramms.

Zusätzlich zu den Ausführungen im Zusammenhang mit FIG 1 wird im Zusammenhang mit FIG 2 beispielhaft ein drittes Benutzerprofil beschrieben. Auf Basis des dritten Benutzerprofils wird ein Fernzugriff von dem stationären Server 14 auf verschiedene Netzwerkteilnehmer erster Art 12 des schienengebundenen Personentransportfahrzeugs 10 zum Zwecke einer Wartung gesteuert 106. Mittels des dritten Benutzerprofils wird dem stationären Server 14 eine vollumfängliche Zugriffsberechtigung auf zumindest einen Teil aller Netzwerkteilnehmer erster Art 12 des schienengebundenen Personentransportfahrzeugs 10 zugeordnet 116. So kann beispielsweise mittels des dritten Benutzerprofils ein Zugriff auf Steuerungseinrichtungen des schienengebundenen Personentransportfahrzeugs 10 vorgesehen werden. Auf diese Weise wird es ermöglicht, Software-Updates oder eine Anpassung von Steuerungsparametern einfach auf Distanz durchzuführen. Zum Zwecke einer Steuerung 106 des Fernzugriffs sieht das vorliegende Verfahren 100 vor, dass dem stationären Server 14 mittels des dritten Benutzerprofils eine Eigenschaft zugeordnet wird 110. Diese Eigenschaft betrifft vorliegend den Betriebszustand des schienengebundenen Personentransportfahrzeugs 10 sowie eine Dauer dieses Betriebszustands. Der Betriebszustand sowie die Dauer dieses Betriebszustands wird gemäß des vorliegenden Verfahrens 100 als Information erster Art erfasst 102. Nach Maßgabe dieser erfassten 102 Information erster Art, wird dem stationären Server 14 ein Fernzugriff auf die Netzwerkteilnehmer erster Art 12 freigegeben 112, sofern sich das schienengebundene Personentransportfahrzeug 10 in dem vorgegebenen Betriebszustand befindet. Zudem ist mittels des dritten Benutzerprofils beispielhaft vorgegeben, dass ein Fernzugriff zum Zwecke einer Durchführung eines Software-Updates oder einer andersartigen Änderung an einem Netzwerkteilnehmer erster Art 12 nur unter der zusätzlichen Bedingung freigegeben wird 112, wonach eine Dauer zum Zwecke der Durchführung des Software-Updates oder der Änderung an dem Netzwerkteilnehmer erster Art 12 kürzer ist als eine Dauer dieses vorgegebenen Betriebszustands. Anderenfalls wird dem stationären Server 14 auf Basis der durch das dritte Benutzerprofil vorgegebenen Eigenschaften ein Fernzugriff zu dem vorgenannten Zwecke auf den Netzwerkteilnehmer erster Art 12 verwehrt 114. Damit kann beispielsweise verhindert werden, dass eine Aufnahme eines Fahrbetriebs aufgrund eines noch nicht vollendeten Software-Updates beeinträchtigt wird.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren (100) zur Kontrolle eines Fernzugriffs auf wenigstens einen Netzwerkteilnehmer erster Art (12), welcher Teil eines mobilen Netzwerkteilnehmers (10) ist, von einem Netzwerkteilnehmer zweiter Art (14), bei welchem
- eine Information erster Art betreffend den mobilen Netzwerkteilnehmer (10) erfasst wird (102);
- eine Information zweiter Art betreffend eine Zugriffsberechtigung des Netzwerkteilnehmers zweiter Art (14) auf den wenigstens einen Netzwerkteilnehmer erster Art (12) ermittelt wird (104);
- der Fernzugriff auf den wenigstens einen Netzwerkteilnehmer erster Art (12) auf Basis der erfassten Information erster Art (102) sowie der ermittelten Information zweiter Art (104) gesteuert wird (106),
**dadurch gekennzeichnet, dass**
der Fernzugriff auf den wenigstens einen Netzwerkteilnehmer erster Art (12) auf Basis einer Information erster Art betreffend eine Dauer des Betriebszustands des mobilen Netzwerkteilnehmers (10) sowie der ermittelten Information zweiter Art (104) gesteuert wird (106).

2. Verfahren (100) nach Anspruch 1,
bei welchem
- mehrere Netzwerkteilnehmer erster Art (12) zu einer Gruppe zusammengefasst werden (108);
- die Information erster Art betreffend den mobilen Netzwerkteilnehmer (10) erfasst wird (102);
- eine Information zweiter Art betreffend eine Zugriffsberechtigung des Netzwerkteilnehmers zweiter Art (14) auf die Gruppe der Netzwerkteilnehmer erster Art (12) ermittelt wird (104);
- der Fernzugriff auf die Gruppe der Netzwerkteilnehmer erster Art (12) auf Basis der erfassten Information erster Art (102) sowie der ermittelten Information zweiter Art (104) gesteuert wird (106).

3. Verfahren (100) nach einem der vorhergehenden Ansprüche, bei welchem der Fernzugriff auf den Netzwerkteilnehmer erster Art (12) auf Basis einer Information erster Art betreffend eine Position des mobilen Netzwerkteilnehmers (10) und/oder einen Fahrweg des mobilen Netzwerkteilnehmers (10) sowie der ermittelten Information zweiter Art (104) gesteuert wird (106) .

4. Verfahren (100) nach einem der vorhergehenden Ansprüche, bei welchem der Fernzugriff auf den wenigstens einen Netzwerkteilnehmer erster Art (12) auf Basis einer Information erster Art betreffend eine Personenpräsenz in dem mobilen Netzwerkteilnehmer (10) sowie der ermittelten Information zweiter Art (104) gesteuert wird (106).

5. Verfahren (100) nach einem der vorhergehenden Ansprüche, bei welchem
- als mobiler Netzwerkteilnehmer (10) ein schienengebundenes Fahrzeug vorgesehen wird;
- als der wenigstens eine Netzwerkteilnehmer erster Art (12) eine Überwachungskamera, eine raumlufttechnische Anlage, eine Beleuchtungseinrichtung, eine Personenzählvorrichtung und/oder eine Vorrichtung zum Zwecke einer Erfassung einer Personenpräsenz vorgesehen wird.

6. Verfahren (100) nach einem der vorhergehenden Ansprüche, bei welchem
- dem Netzwerkteilnehmer zweiter Art (14) zum Zwecke einer Steuerung (106) des Fernzugriffs eine vorgebbare Eigenschaft zugeordnet wird (110);
- nach Maßgabe der Eigenschaft des Netzwerkteilnehmers zweiter Art (14) der Fernzugriff auf den wenigstens einen Netzwerkteilnehmer erster Art (12) auf Basis der erfassten Information erster Art (102) und der ermittelten Information zweiter Art (104) freigegeben wird (112).

7. Verfahren (100) nach einem der vorhergehenden Ansprüche, bei welchem
- dem Netzwerkteilnehmer zweiter Art (14) zum Zwecke einer Steuerung (106) des Fernzugriffs auf den wenigstens einen Netzwerkteilnehmer erster Art (12) eine vorgebbare Eigenschaft zugeordnet wird (110);
- nach Maßgabe der Eigenschaft des Netzwerkteilnehmers zweiter Art (14) der Fernzugriff auf den wenigstens einen Netzwerkteilnehmer erster Art (12) auf Basis der erfassten Information erster Art (102) und der ermittelten Information zweiter Art (104) verwehrt oder abgebrochen wird (114).

8. Verfahren (100) nach einem Ansprüche 6 oder 7,
bei welchem
- ein Netzwerkteilnehmer zweiter Art (14) vorgesehen wird, welchem eine Zugriffsberechtigung auf wenigstens eine Überwachungskamera (12) des mobilen Netzwerkteilnehmers (10) zugeordnet wird (116);
- diesem Netzwerkteilnehmer zweiter Art (14) eine Eigenschaft zugeordnet wird (110), nach Maßgabe derer der Fernzugriff auf die Überwachungskamera (12) freigegeben wird (112), solange sich eine Position des mobilen Netzwerkteilnehmers (10) innerhalb eines vorgebbaren Bereichs des mobilen Netzwerkteilnehmers (10) befindet, und anderenfalls verwehrt oder abgebrochen wird (114).

9. Verfahren (100) nach einem Ansprüche 6 bis 8,
bei welchem
- ein Netzwerkteilnehmer zweiter Art (14) vorgesehen wird, für welchen eine Zugriffsberechtigung auf wenigstens eine Überwachungskamera (12) des mobilen Netzwerkteilnehmers (10) zugeordnet wird (116);
- diesem Netzwerkteilnehmer zweiter Art (14) eine Eigenschaft zugeordnet wird (110), nach Maßgabe derer der Fernzugriff auf die wenigstens eine Überwachungskamera (12) freigegeben wird (112), sofern sich keine Person innerhalb wenigstens eines vorgebbaren Abschnitts des mobilen Netzwerkteilnehmers (10) befindet und/oder sich der mobile Netzwerkteilnehmer (10) in einem vorgebbaren Betriebszustand befindet, und anderenfalls verwehrt oder abgebrochen wird (114).

10. Verfahren (100) nach einem der vorhergehenden Ansprüche, bei welchem als Netzwerkteilnehmer zweiter Art (14) ein stationärer Netzwerkteilnehmer vorgesehen wird.

11. Netzwerk (16) aufweisend
einen mobilen Netzwerkteilnehmer (10) mit wenigstens einem Netzwerkteilnehmer erster Art (12) und einem Netzwerkteilnehmer zweiter Art (14),
**dadurch gekennzeichnet, dass**
mittels des Netzwerkteilnehmers zweiter Art (14) das Verfahren (100) nach einem der vorhergehenden Ansprüche durchführbar ist.

12. Netzwerk (16) nach Anspruch 11,
**dadurch gekennzeichnet, dass**
als der mobile Netzwerkteilnehmer (10) ein schienengebundenes Fahrzeug, vorzugsweise ein schienengebundenes Personentransportfahrzeug, vorgesehen ist.

13. Computerprogramm, welches bei dessen Ausführung das Netzwerk (16) nach einem der Ansprüche 11 bis 12 dazu veranlasst, das Verfahren (100) nach einem der Ansprüche 1 bis 10 durchzuführen.

14. Computerlesbares Medium, aufweisend Instruktionen, welche das Netzwerk (16) nach einem der Ansprüche 11 bis 12 dazu veranlassen, das Verfahren (100) nach einem der Ansprüche 1 bis 10 durchzuführen.

## Claims

1. Method (100) for controlling remote access to at least one network participant of a first kind (12), which is part of a mobile network participant (10), from a network participant of a second kind (14), in which
- an item of information of the first kind relating to the mobile network participant (10) is captured (102);
- an item of information of the second kind relating to an access authorisation of the network participant of the second kind (14) to the at least one network participant of the first kind (12) is ascertained (104);
- the remote access to the at least one network participant of the first kind (12) is controlled (106) on the basis of the captured information of the first kind (102) as well as the ascertained information of the second kind (104),
**characterised in that**
the remote access to the at least one network participant of the first kind (12) is controlled (106) on the basis of an item of information of the first kind relating to a duration of the operating state of the mobile network participant (10) as well as the ascertained information of the second kind (104).

2. Method (100) according to claim 1,
in which
- multiple network participants of the first kind (12) are merged (108) to form a group;
- the information of the first kind relating to the mobile network participant (10) is ascertained (102);
- an item of information of the second kind relating to an access authorisation of the network participant of the second kind (14) to the group of the network participants of the first kind (12) is ascertained (104);
- the remote access to the group of the network participants of the first kind (12) is controlled (106) on the basis of the captured information of the first kind (102) as well as the ascertained information of the second kind (104).

3. Method (100) according to one of the preceding claims, in which the remote access to the network participants of the first kind (12) is controlled (106) on the basis of an item of information of the first kind relating to a position of the mobile network participant (10) and/or a travel path of the mobile network participant (10) as well as the ascertained information of the second kind (104).

4. Method (100) according to one of the preceding claims, in which the remote access to the at least one network participant of the first kind (12) is controlled (106) on the basis of an item of information of the first kind relating to a personal presence in the mobile network participant (10) as well as the ascertained information of the second kind (104).

5. Method (100) according to one of the preceding claims,
in which
- a rail-bound vehicle is provided as the mobile network participant (10);
- a monitoring camera, a room air-related installation, a lighting facility, a person counting apparatus and/or an apparatus for the purpose of capturing a personal presence are provided as the at least one network participant of the first kind (12).

6. Method (100) according to one of the preceding claims,
in which
- the network participant of the second kind (14) is assigned (110) a predefinable property for the purpose of controlling (106) the remote access;
- in accordance with the property of the network participant of the second kind (14), the remote access to the at least one network participant of the first kind (12) is approved (112) on the basis of the captured information of the first kind (102) and the ascertained information of the second kind (104).

7. Method (100) according to one of the preceding claims,
in which
- the network participant of the second kind (14) is assigned (110) a predefinable property for the purpose of controlling (106) the remote access to the at least one network participant of the first kind (12);
- in accordance with the property of the network participant of the second kind (14), the remote access to the at least one network participant of the first kind (12) is refused or cancelled (114) on the basis of the captured information of the first kind (102) and the ascertained information of the second kind (104).

8. Method (100) according to one of claims 6 or 7,
in which
- a network participant of the second kind (14) is provided, to which an access authorisation to at least one monitoring camera (12) of the mobile network participant (10) is assigned (116);
- assigned (110) to said network participant of the second kind (14) is a property, in accordance with which the remote access to the monitoring camera (12) is approved (112), as long as a position of the mobile network participant (10) is located within a predefinable region of the mobile network participant (10), and otherwise is refused or cancelled (114).

9. Method (100) according to one of claims 6 to 8,
in which
- a network participant of the second kind (14) is provided, for which an access authorisation to at least one monitoring camera (12) of the mobile network participant (10) is assigned (116);
- assigned (110) to said network participant of the second kind (14) is a property, in accordance with which the remote access to the at least one monitoring camera (12) is approved (112), as long as no person is located within at least one predefinable section of the mobile network participant (10) and/or the mobile network participant (10) is located in a predefinable operating state, and otherwise is refused or cancelled (114).

10. Method (100) according to one of the preceding claims,
in which a stationary network participant is provided as the network participant of the second kind (14).

11. Network (16) having
a mobile network participant (10) with at least one network participant of the first kind (12) and one network participant of the second kind (14),
**characterised in that**
the method (100) according to one of the preceding claims can be performed by means of the network participant of the second kind (14).

12. Network (16) according to claim 11,
**characterised in that**
a rail-bound vehicle, preferably a rail-bound passenger transport vehicle, is provided as the mobile network participant (10).

13. Computer program which, when it is executed, prompts the network (16) according to one of claims 11 to 12 to perform the method (100) according to one of claims 1 to 10.

14. Computer-readable medium, having instructions which prompt the network (16) according to one of claims 11 to 12 to perform the method (100) according to one of claims 1 to 10.

## Revendications

1. Procédé (100) de contrôle d'un accès à distance à au moins un participant à un réseau d'un premier type (12), qui fait partie d'un participant (10) mobile au réseau, par un participant au réseau d'un deuxième type (14), dans lequel
- on saisit (102) une information d'un premier type concernant le participant (10) mobile au réseau ;
- on établit (104) une information d'un deuxième type concernant une autorisation d'accès du participant au réseau du deuxième type (14) à le au moins un participant au réseau du premier type (12) ;
- on commande (106) l'accès à distance à le au moins un participant au réseau du premier type (12) sur la base de l'information saisie du premier type (102) ainsi que de l'information établie du deuxième type (104) ;
**caractérisé en ce que** l'
on commande (106) l'accès à distance à le au moins un participant au réseau du premier type (12) sur la base d'une information du premier type concernant une durée de l'état de fonctionnement du participant (10) mobile au réseau ainsi que de l'information établie du deuxième type (104).

2. Procédé (100) suivant la revendication 1,
dans lequel
- on rassemble (108) plusieurs participants au réseau du premier type (12) en un groupe ;
- on saisit (102) l'information du premier type concernant le participant (10) mobile au réseau ;
- on établit (104) une information du deuxième type concernant une autorisation d'accès du participant au réseau du deuxième type (14) au groupe des participants au réseau du premier type (12) ;
- on commande (106) l'accès à distance au groupe des participants au réseau du premier type (12) sur la base de l'information saisie du premier type (102) ainsi que de l'information établie du deuxième type (104).

3. Procédé (100) suivant l'une des revendications précédentes, dans lequel on commande (106) l'accès à distance au participant au réseau du premier type (12) sur la base d'une information du premier type concernant une position du participant (10) mobile au réseau et/ou d'un chemin de circulation du participant (10) mobile au réseau ainsi que de l'information établie du deuxième type (104).

4. Procédé (100) suivant l'une des revendications précédentes, dans lequel on commande (106) l'accès à distance à le au moins un participant au réseau du premier type (12) sur la base d'une information du premier type concernant une présence de personnes dans le participant (10) mobile au réseau ainsi que de l'information établie du deuxième type (104).

5. Procédé (100) suivant l'une des revendications précédentes, dans lequel
- on prévoit un véhicule guidé sur rail comme participant (10) mobile au réseau ;
- on prévoit, comme le au moins un participant au réseau du premier type (12), une caméra de contrôle, une installation de la technique d'aération, un dispositif d'éclairage, un dispositif de dénombrement de personnes et/ou un dispositif destiné à la détection de la présence de personnes.

6. Procédé (100) suivant l'une des revendications précédentes, dans lequel
- on affecte (110) une propriété pouvant être donnée à l'avance au participant au réseau du deuxième type (14) en vue d'une commande (106) de l'accès à distance ;
- en proportion de la propriété du participant au réseau du deuxième type (14), on libère (112) l'accès à distance à le au moins un participant au réseau du premier type (12) sur la base de l'information saisie du premier type (102) et de l'information établie du deuxième type (104).

7. Procédé (100) suivant l'une des revendications précédentes, dans lequel
- on affecte (110) une propriété pouvant être donnée à l'avance au participant au réseau du deuxième type (14) en vue d'une commande (106) de l'accès à distance à le au moins un participant au réseau du premier type (12) ;
- suivant la proportion de la propriété du participant au réseau du deuxième type (14), on fait obstacle ou on interrompt (114) l'accès à distance à le au moins un participant au réseau du premier type (12) sur la base de l'information saisie du premier type (102) et de l'information établie du deuxième type (104).

8. Procédé (100) suivant l'une des revendications 6 ou 7, dans lequel
- on prévoit un participant au réseau du deuxième type (14), auquel on affecte (116) une autorisation d'accès à au moins une caméra (12) de contrôle du participant (10) mobile au réseau ;
- on affecte (110) à ce participant au réseau du deuxième type (14) une propriété, en proportion de laquelle on libère (112) l'accès à distance à la caméra (12) de contrôle, tant qu'une position du participant (10) mobile au réseau se trouve dans une plage pouvant être donnée à l'avance du participant (10) mobile au réseau et sinon on y fait obstacle ou on l'interrompt (114).

9. Procédé (100) suivant l'une des revendications 6 à 8,
dans lequel
- on prévoit un participant au réseau du deuxième type (14), pour lequel on affecte (116) une autorisation d'accès à au moins une caméra (12) de contrôle du participant (10) mobile au réseau ;
- on affecte (110) à ce participant au réseau du deuxième type (14) une propriété, en proportion de laquelle on libère (112) l'accès à distance à la caméra (12) de contrôle, tant que personne ne se trouve à l'intérieur d'au moins une partie pouvant être donnée à l'avance du participant (10) mobile au réseau et/ou tant que le participant (10) mobile au réseau se trouve dans un état de fonctionnement pouvant être donné à l'avance, et sinon on y fait obstacle ou on l'interrompt (114).

10. Procédé (100) suivant l'une des revendications précédentes, dans lequel on prévoit comme participant au réseau du deuxième type (14), un participant au réseau stationnaire.

11. Réseau (16) comportant
un participant (10) mobile au réseau ayant au moins un participant au réseau d'un premier type (12) et un participant au réseau d'un deuxième type (14),
**caractérisé en ce que**,
au moyen du participant au réseau du deuxième type (14), on effectue le procédé (100) suivant l'une des revendications précédentes.

12. Réseau (16) suivant la revendication 11,
**caractérisé en ce qu'**
il est prévu comme participant (10) mobile au réseau, un véhicule guidé sur rail, de préférence un véhicule guidé sur rail de transport des personnes.

13. Programme d'ordinateur, qui, lors de son exécution, fait que le réseau (16) suivant l'une des revendications 11 à 12, exécute le procédé (100) suivant l'une des revendications 1 à 10.

14. Support déchiffrable par ordinateur, comportant des instructions, qui font que le réseau (16) suivant l'une des revendications 11 à 12, exécute le procédé (100) suivant l'une des revendications 1 à 10.
